# FASCICULE DE BREVET EUROPEEN

(11) **EP 0 872 783 B1**
(45) Date de publication et mention de la délivrance du brevet: **14.08.2002**
(21) Numéro de dépôt: 97106061.1
(22) Date de dépôt: 14.04.1997
(51) Int. Cl.: G04C 10/02, G04B 19/12

(54) **Cadran formé d'une cellule solaire notamment pour pièce d'horlogerie**
Zifferblatt im Form einer Solarzelle, insbesondere für eine Uhr
Dial constituted by a solar cell, in particular for a timepiece

(43) Date de publication de la demande: 21.10.1998
(73) Titulaire: ASULAB S.A., 2074 Marin (CH)
(72) Inventeur: Saurer, Eric, 2022 Bevaix (CH); Fischer, Diego, 2000 Neuchâtel (CH)
(74) Mandataire: Ravenel, Thierry Gérard Louis

(56) Documents cités:
- EP-A- 0 697 636

## Description

La présente invention concerne un cadran formé d'une cellule solaire et destiné notamment à alimenter un circuit horométrique d'une pièce d'horlogerie ou un circuit électrique d'un appareil tel qu'un appareil de mesure. L'invention concerne plus particulièrement un cadran dont la face montrée à l'utilisateur présente un aspect métallique.

On connaît déjà des pièces d'horlogerie, notamment des montres, dont le circuit horométrique est alimenté par une ou plusieurs cellules solaires au silicium amorphe a-Si:H/n-i-p ou p-i-n connectées en série. Ces cellules utilisant la conversion photovoltaïque pour produire une énergie électrique sont généralement réalisées sur un substrat métallique sur lequel on dépose successivement une couche isolante, une couche conductrice intérieure transparente ou opaque, des couches successives n-i-p de silicium amorphe, ainsi qu'une couche conductrice extérieure transparente. L'utilisation de la couche isolante permet la mise en série éventuelle de plusieurs éléments photovoltaïques sur le même substrat métallique. Les couches conductrices transparentes sont généralement réalisées en oxyde d'indium (ITO) ou en oxyde d'étain (SnO₂) ou en oxyde de zinc (ZnO) dopé. L'utilisation d'ITO de SnO₂ ou de ZnO pour la réalisation de la couche conductrice transparente présente certains inconvénients. En effet, la couche d'ITO exposée à la lumière donne lieu à un phénomène d'interférence qui conduit à des irisations colorées non désirées à la surface du cadran, notamment lorsqu'il s'agit d'un cadran de montre. Pour pallier à ce problème, il est connu de recouvrir l'ITO de laque, toutefois, cette couche de laque supplémentaire donne un aspect noirâtre au cadran, ce qui n'est pas non plus satisfaisant lorsque l'on souhaite utiliser un tel cadran pour une montre, dans la mesure où le cadran intervient de façon prépondérante dans la fonction ornementale de la montre. De plus, la résistivité de l'ITO est relativement élevée (de l'ordre de 8 x 10⁻⁴ Ωcm), ce qui conduit à une chute de tension interne importante dans la cellule et ceci en particulier lorsque la cellule est exposée à une lumière de forte intensité.

Le document WO-A-96/12989 (EP-A-0 788 037) tente de remédier à ces problèmes. Selon ce document, le cadran est formé d'une cellule solaire masquée par une feuille en céramique translucide réalisée en Al₂O₃ de sorte que la cellule solaire est masquée de la vue de l'utilisateur. Toutefois, l'aspect de cette cellule est blanc laiteux et par conséquent peu attractif pour le consommateur. Le document WO-A-96/31810 (EP-A-0 819 995) propose par ailleurs de modifier l'aspect d'un tel cadran en ajoutant une couche colorée sur la face du cadran vue par l'utilisateur. Cependant le résultat obtenu à l'aide de cette couche supplémentaire transmissive reste sans éclat et ne permet pas de rehausser significativement l'aspect esthétique du cadran.

L'invention a donc pour but principal de remédier aux inconvénients de l'art antérieur susmentionné en fournissant un cadran muni d'une cellule solaire présentant à l'utilisateur un brillant intense particulièrement adapté à la réalisation de cadran décoratifs, par exemple pour pièce d'horlogerie, tout en maintenant des performances électriques acceptables pour l'application de la cellule utilisée comme source d'énergie et ce à l'aide d'une structure de cellule simple et économique.

A cet effet l'invention a pour objet un cadran, notamment pour pièce d'horlogerie, formé d'une cellule solaire comprenant un substrat, au moins une pluralité de couches superposées définissant au moins un élément n-i-p ou p-i-n et une couche conductrice formant une première électrode destinée à être exposée au rayonnement lumineux, caractérisé en ce que ladite électrode est formée d'une couche métallique transflective.

Ainsi, on obtient un cadran formé d'une cellule solaire, qui présente un aspect extérieur amélioré dans la mesure où la couche métallique réfléchit une fraction de la lumière incidente et offre un éclat métallique esthétique tout en laissant passer une fraction de la lumière incidente suffisante pour que l'effet photovoltaïque puisse avoir lieu.

On notera que l'utilisation d'une couche partiellement réfléchissante pour former la couche conductrice exposée au rayonnement lumineux va à l'encontre du principe couramment utilisé par l'homme de métier dans ce domaine, qui tend constamment à réaliser de telles couches présentant une transmission maximale et à réduire à un minimum toute réflexion de la lumière incidente sur la couche conductrice.

Un tel cadran présente également l'avantage d'être monolithique et par conséquent de réaliser la double fonction de cadran et de source d'énergie électrique pour une pièce d'horlogerie ou analogue.

Selon une caractéristique avantageuse de l'invention, la première électrode présente une réflectivité de la lumière, à une longueur d'onde de 550 nm, comprise entre 90% et 50% et de préférence entre 85% et 60%.

Avec une telle réflectivité et une illumination faible, par exemple 100 lux, le cadran selon l'invention peut fournir avec une couche d'argent d'épaisseur d'environ 30nm un courant de l'ordre de 1µA ou plus, ce qui est suffisant pour alimenter le circuit garde-temps d'une pièce d'horlogerie électronique.

Le métal transflectif présente en outre une conductivité plus élevée que l'ITO ce qui conduit, dans le cas d'une exposition à un rayonnement de forte intensité, à une chute de tension plus faible dans le métal que dans l'ITO.

On notera également que cette réflectivité permet aisément de dissimuler l'utilisation d'une cellule solaire en conférant au cadran l'aspect d'un cadran classique.

Selon une autre caractéristique préférée, le métal de la première électrode est choisi parmi l'ensemble comprenant l'or, l'aluminium, l'argent, le platine, le palladium , le rhodium , le nickel, le titane et le cuivre.

Ces métaux ont l'avantage important de présenter des coefficients de réflexion suffisants pour les applications en question dans les longueurs d'ondes du visible tout en ayant une conductivité électrique suffisamment élevée.

D'autres caractéristiques et avantages de l'invention apparaîtront plus clairement à lecture de la description suivante d'un mode de réalisation de l'invention donné à titre purement illustratif et non limitatif, cette description étant faite en liaison avec les dessins dans lesquels :
- la figure 1 est une coupe longitudinale d'un premier mode de réalisation d'un cadran selon l'invention;
- la figure 2 est une coupe similaire à celle représentée à la figure 1, montrant un deuxième mode de réalisation d'un cadran selon l'invention, et
- la figure 3 est une coupe similaire à celle représentée à la figure 1, montrant un troisième mode de réalisation d'un cadran selon l'invention, le substrat du cadran étant transparent et traversé par la lumière.

La description de l'invention va être faite dans le cadre d'une application à un cadran pour une pièce d'horlogerie telle qu'une montre, toutefois il va de soi que l'invention n'est nullement limitée à cette application et qu'elle pourra être avantageusement utilisée dans le cadre de toute autre application dans des instruments électriques à faible consommation, notamment portables, comprenant un cadran.

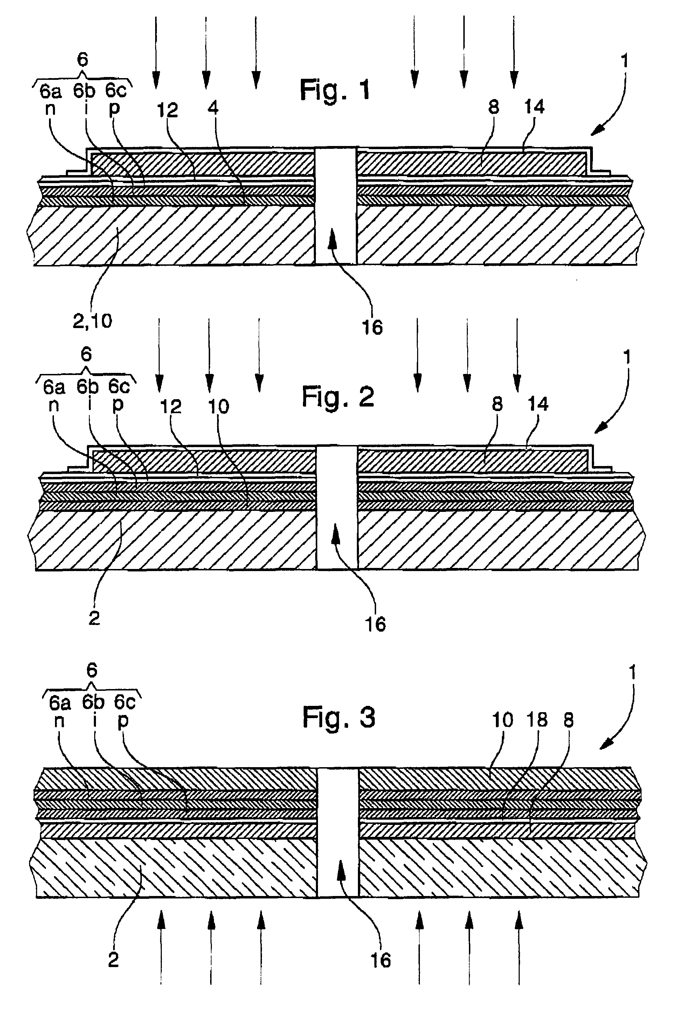

En se référant tout d'abord à la figure 1, on voit un cadran de montre formé d'une cellule solaire selon l'invention et désigné par la référence générale 1. Le cadran est capable de transformer un rayonnement lumineux en un courant électrique par un processus appelé photo-conversion pour alimenter, via un circuit d'alimentation, un circuit garde-temps de la montre. Ces circuits et leurs connections (non représentés) sont bien connus de l'homme de métier et ne seront par conséquent pas décrits ici plus en détail. Pour une description détaillée du phénomène de photo-conversion on se référera à l'ouvrage intitulé "Photopiles solaires" de A. Ricaud et publié aux éditions Presses polytechniques et universitaires romandes, ISBN 2-88074326-5.

Le cadran 1 selon l'invention comprend un substrat 2 formé d'une plaque métallique rigide, par exemple en acier inoxydable. Le substrat 2 comprend une face 4 sur laquelle sont déposées une pluralité de couches 6a, 6b, 6c minces successives respectivement n, i, p. Ces trois couches 6a, 6b et 6c, formant une cellule solaire élémentaire, définissent une diode, c'est-à-dire une diode à jonction n-i-p comportant une zone intrinsèque, intercalée entre une zone n et une zone p, qui peut être exposée à un rayonnement lumineux. La cellule solaire élémentaire 6 est constituée de trois couches de matériaux semi-conducteurs ayant des types de conductivité différents pour constituer la diode n-i-p. La couche 6a de la cellule élémentaire est par exemple une couche de silicium amorphe hydrogéné (a-Si:H) dopée par exemple avec du phosphore pour obtenir une conductivité de type n. L'épaisseur de cette couche est de préférence de l'ordre de 10 à 30 nm. La couche suivante 6b de la cellule élémentaire 6 est une couche intrinsèque i qui est plus épaisse que la précédente et dans laquelle un courant est photo-généré lorsque la cellule est exposée à un rayonnement lumineux. La couche 6b a par exemple une épaisseur de l'ordre de 200 à 500 nm. La troisième couche 6c de la cellule élémentaire 6 est dopée par exemple avec du bore pour obtenir une conductivité de type p. L'épaisseur de cette couche est de préférence de l'ordre de 10 à 20 nm.

Dans cet exemple, la couche 6a de type n est la plus proche du substrat 2.

De préférence, les couches 6a, 6b et 6c sont des couches microcristallines.

Pour relier la cellule 6 au circuit d'alimentation, la cellule comprend en outre une couche conductrice formant une première électrode 8 qui est disposée au-dessus de la couche 6c et en contact avec celle-ci, cette électrode 8 étant l'élément de la cellule qui est destiné à être directement exposé au rayonnement lumineux. Pour fermer le circuit électrique, la cellule élémentaire 6 comprend une deuxième couche conductrice 10 formant une deuxième électrode qui est en contact avec la couche 6a. Dans l'exemple représenté à la figure 1, la deuxième électrode 10 est formée par le substrat 2 conducteur lui-même. Si le substrat 10 présente une mauvaise réflectivité une ou plusieurs couches intermédiaires conductrices (d'oxyde (ZnO), ou métalliques) peuvent être intercalées entre le substrat 10 et la cellule 6 dans le but d'augmenter l'absorption de la lumière par la cellule.

Bien entendu, dans le cas où le substrat est réalisé en un matériau non conducteur comme cela est représenté à la figure 2, par exemple en plastique, l'électrode 10 est réalisée par une couche métallique ayant de préférence une bonne réflectivité, par exemple réalisée en argent ou en un alliage d'argent.

Selon l'invention, la première électrode 8 est formée d'une couche transflective, qui présente une réflectivité du rayonnement lumineux incident comprise entre 90% et 50% à une longueur d'onde de 550 nm, ce qui permet d'obtenir l'éclat métallique et donc l'aspect esthétique recherché pour le cadran. Pour obtenir cette reflectivité, on agit essentiellement sur l'épaisseur du métal de la couche 8. De préférence, la première électrode 8 présente une réflectivité comprise entre 85% et 60% à une longueur d'onde de 550 nm.

On a par ailleurs constaté qu'avec une épaisseur de la couche 8 de l'ordre de 20 nm et de préférence 35 nm, une cellule élémentaire ayant une surface d'un cadran de montre classique (de l'ordre 5 cm²), laisse passer suffisamment de lumière même dans des conditions de faible éclairement (100 lux) pour fournir une énergie électrique permettant d'alimenter un circuit garde-temps d'une montre électronique, à savoir typiquement un courant de 1µA en moyenne sous une tension de 1,5 V.

La couche métallique 8 peut être formée d'un métal choisi parmi l'ensemble comprenant l'or, le cuivre, l'aluminium, l'argent, le platine, le palladium, le nickel, le titane et le rhodium. Bien entendu d'autres métaux présentant des caractéristiques de réflectivité et de conductivité électrique du même ordre peuvent également convenir. De préférence, on choisira des métaux qui pour les réflectivité désirées conduisent à des résistances par carré comprises de préférence entre 0,5 et 30 Ohms.

A titre d'exemple, l'argent présente un rapport conductivité spécifique/réflectivité optimal et particulièrement bien adapté à la réalisation de la couche 8.

Le dépôt du métal de la couche 8 peut être réalisé classiquement par pulvérisation cathodique, évaporation thermique sous vide ou encore à l'aide d'un canon à électrons. Ce dépôt peut être réalisé à travers un masque définissant les contours de la couche 8.

Afin de faciliter le dépôt de la couche conductrice 8, sur la couche 6c de type p, il peut être prévu une couche intermédiaire 12 d'accrochage. L'épaisseur de cette couche 12 est aussi faible que possible et typiquement de l'ordre de 1 nm, afin de laisser passer le plus possible le rayonnement lumineux. Cette couche d'accrochage 12 peut être réalisée en chrome ou en titane.

Selon une variante avantageuse, la cellule élémentaire peut comprendre en outre une couche protectrice 14 transparente s'étendant au-dessus de la première électrode 8, afin notamment de protéger la cellule 6 contre l'oxydation et la corrosion et toute autre altération physique pouvant par exemple se produire lors la manipulation ou du montage du cadran 1. Cette couche peut être constituée par exemple d'une résine polymère transparente telle qu'un acrylate, méthacrylate, polyvinyle ou analogue, ayant une épaisseur de quelques µm.

On notera également à ce propos que la couche 1 recouvre les bords de la première électrode 8, ce qui permet d'éviter tout problème de court-circuit de la première électrode avec la deuxième électrode (qui est le substrat dans le mode de réalisation représenté à la figure 1).

Le cadran 1 comporte enfin un perçage 16 situé sensiblement en son centre pour permettre le passage des axes sur lesquels sont fixées les aiguilles de la montre que le cadran 1 est destiné à équiper. Là également des moyens identiques seront appliqués pour éviter le court-circuit entre les couches.

A la figure 3, on a représenté un autre mode de réalisation d'un cadran selon l'invention, dans lequel les éléments identiques à ceux décrits en liaison avec les figure 1 et 2 ont été désignés par les mêmes références numériques.

A la différence des modes de réalisation représentés aux figures 1 et 2, la couche 6c de type p est la plus proche du substrat 2 et le substrat est un substrat transparent, par exemple en verre ou en plastique transparent. Dans ce mode de réalisation la première électrode 8, c'est-à-dire l'électrode exposée au rayonnement lumineux, est intercalée entre le substrat 2 et la couche 6c. Une couche barrière de diffusion 18 conductrice peut en outre être intercalée entre la première électrode 8 et la couche 6c afin d'empêcher toute diffusion du métal de l'électrode dans les couches de la cellule élémentaire 6 au cours de la fabrication du cadran. La couche barrière de diffusion 18 peut être constituée d'oxyde de zinc (ZnO) ou d'oxyde d'étain (SnO₂) et avoir une épaisseur comprise de préférence entre 10 et 500 nm.

On notera que le substrat 2 peut, si on le désire, être structuré, c'est-à-dire présenter un état de surface pouvant conférer au cadran un aspect diffusant métallique.

## Revendications

1. Cadran, notamment pour pièce d'horlogerie, formé d'une cellule solaire comprenant un substrat, au moins une pluralité de couches superposées définissant au moins un élément n-i-p ou p-i-n et une couche conductrice formant une première électrode destinée à être exposée au rayonnement lumineux, **caractérisé en ce que** ladite électrode est formée d'une couche métallique transflective.

2. Cadran selon la revendication 1, **caractérisé en ce que** ladite première électrode présente une reflectivité de la lumière comprise entre 90% et 50% à une longueur d'onde de 550 nm et de préférence entre 85% et 60%.

3. Cadran selon la revendication 1, **caractérisé en ce que** le métal de la première électrode est choisi parmi l'ensemble comprenant l'or, l'aluminium, l'argent, le platine, le palladium, le nickel, le titane, le rhodium et le cuivre.

4. Cadran selon la revendication 1, **caractérisé en ce que** la première électrode présente une épaisseur minimum comprise entre 2 et 10 nm et une épaisseur maximum comprise entre 15 et 40 nm.

5. Cadran selon l'une quelconque des revendications précédentes, **caractérisé en ce qu'**une couche d'accrochage et/ou une barrière de diffusion est intercalée entre la première électrode et la couche p.

6. Cadran selon l'une des revendications précédentes, **caractérisé en ce que** ledit élément est un élément n-i-p et en ce la couche n est la couche la plus proche du substrat.

7. Cadran selon la revendication 6, **caractérisé en ce que** le substrat est conducteur et forme une deuxième électrode de l'élément n-i-p.

8. Cadran selon la revendication 6, **caractérisé en ce que** le substrat est isolant et **en ce qu'**une deuxième couche conductrice formant une deuxième électrode est interposée entre le substrat et la couche n.

9. Cadran selon la revendication 6, **caractérisé en ce que** la première électrode est recouverte d'une couche de laque de protection transparente.

10. Cadran selon l'une des revendications 1 à 5, **caractérisé en ce que** ledit élément est un élément p-i-n, en ce la couche p est la couche la plus proche du substrat et **en ce que** le substrat est transparent.

11. Cadran selon la revendication 10, **caractérisé en ce que** substrat est réalisé en verre.

12. Cadran selon l'une des revendications précédentes à l'exception des revendications 7 et 9, **caractérisé en ce que** le substrat est transparent et **en ce que** l'électrode transflective est disposée entre le substrat et ladite pluralité de couches superposées définissant au moins un élément n-i-p ou p-i-n.

13. Cadran selon l'une des revendications précédentes, **caractérisé en ce que** le cadran comporte un perçage destiné au passage d'un axe d'aiguilles.

14. Cadran selon l'une des revendications précédentes, **caractérisé en ce que** la face du substrat qui porte ledit élément n-i-p ou p-i-n est structurée.

## Claims

1. Dial, in particular for a timepiece, formed of a solar cell including a substrate, at least one plurality of superposed layers defining at least one n-i-p or p-i-n element and a conductive layer forming a first electrode arranged to be exposed to light, **characterized in that** said electrode is formed of a partially reflective metal layer.

2. Dial according to claim 1, **characterized in that** said first electrode has light reflectivity comprised between 90% and 50% at a wavelength of 550 nm and preferably between 85% and 60%.

3. Dial according to claim 1, **characterized in that** the metal of the first electrode is selected from the group including gold, aluminium, silver, platinum, palladium, nickel, titanium, rhodium and copper.

4. Dial according to claim 1, **characterized in that** the first electrode has a minimum thickness comprised between 2 and 10 nm and a maximum thickness comprised between 15 and 40 nm.

5. Dial according to any one of the preceding claims, **characterized in that** a binder layer and/or a diffusion barrier layer is inserted between the first electrode and the p layer.

6. Dial according to any of the preceding claims, **characterized in that** said element is an n-i-p element and **in that** the n layer is the closest layer to the substrate.

7. Dial according to claim 6, **characterized in that** the substrate is conductive and forms a second electrode of the n-i-p element.

8. Dial according to claim 6, **characterized in that** the substrate is insulating and **in that** a second conductive layer forming a second electrode is inserted between the substrate and the n layer.

9. Dial according to claim 6, **characterized in that** the first electrode is covered by a layer of transparent protective lacquer.

10. Dial according to any of claims 1 to 5, **characterized in that** said element is a p-i-n element, **in that** the p layer is the closest layer to the substrate and **in that** the substrate is transparent.

11. Dial according to claim 10, **characterized in that** the substrate is made of glass.

12. Dial according to any of the preceding claims except claims 7 and 9, **characterized in that** the substrate is transparent and **in that** the transflective electrode is disposed between the substrate and said plurality of superposed layers defining at least one element n-i-p or p-i-n.

13. Dial according to any of the preceding claims, **characterized in that** the dial includes a bore arranged for the passage of pipes for hands.

14. Dial according to any of the preceding claims, **characterized in that** the face of the substrate which carries said n-i-p or p-i-n element is structured.

## Patentansprüche

1. Zifferblatt, insbesondere für ein Zeitmeßgerät, das aus einer Solarzelle gebildet ist und ein Substrat, wenigstens eine Mehrzahl übereinanderliegender Schichten, die wenigstens ein n-i-p- oder p-i-n-Element definieren, sowie eine leitende Schicht, die eine erste Elektrode bildet, die dazu bestimmt ist, einer Lichtstrahlung ausgesetzt zu werden, umfaßt, **dadurch gekennzeichnet, daß** die Elektrode aus einer zum Teil durchlässigen und zum Teil reflektierenden metallischen Schicht gebildet ist.

2. Zifferblatt nach Anspruch 1, **dadurch gekennzeichnet, daß** die erste Elektrode ein Lichtreflexionsvermögen besitzt, das bei einer Wellenlänge von 550 nm zwischen 90 % und 50 % und vorzugsweise zwischen 85 % und 60 % liegt.

3. Zifferblatt nach Anspruch 1, **dadurch gekennzeichnet, daß** das Metall der ersten Elektrode aus der Gruppe gewählt ist, die Gold, Aluminium, Silber, Platin, Palladium, Nickel, Titan, Rhodium und Kupfer enthält.

4. Zifferblatt nach Anspruch 1, **dadurch gekennzeichnet, daß** die erste Elektrode eine minimale Dicke, die zwischen 2 und 10 nm liegt, und eine maximale Dicke, die zwischen 15 und 40 nm liegt, aufweist.

5. Zifferblatt nach einem der vorhergehenden Ansprüche, **dadurch gekennzeichnet, daß** zwischen die erste Elektrode und die p-Schicht eine Haftschicht und/oder eine Diffusionssperre eingefügt ist.

6. Zifferblatt nach einem der vorhergehenden Ansprüche, **dadurch gekennzeichnet, daß** das Element ein n-i-p-Element ist, in dem die n-Schicht diejenige Schicht ist, die sich am nähesten zum Substrat befindet.

7. Zifferblatt nach Anspruch 6, **dadurch gekennzeichnet, daß** das Substrat ein Leiter ist und eine zweite Elektrode des n-i-p-Elements bildet.

8. Zifferblatt nach Anspruch 6, **dadurch gekennzeichnet, daß** das Substrat isolierend ist und daß eine zweite leitende Schicht, die eine zweite Elektrode bildet, zwischen dem Substrat und der n-Schicht eingefügt ist.

9. Zifferblatt nach Anspruch 6, **dadurch gekennzeichnet, daß** die erste Elektrode von einer lichtdurchlässigen Schutzlackschicht bedeckt ist.

10. Zifferblatt nach einem der Ansprüche 1 bis 5, **dadurch gekennzeichnet, daß** das Element ein p-i-n-Element ist, in der die p-Schicht diejenige Schicht ist, die sich am nächsten zum Substrat befindet, und daß das Substrat lichtdurchlässig ist.

11. Zifferblatt nach Anspruch 10, **dadurch gekennzeichnet, daß** das Substrat aus Glas hergestellt ist.

12. Zifferblatt nach einem der vorhergehenden Ansprüche mit Ausnahme der Ansprüche 7 und 9, **dadurch gekennzeichnet, daß** das Substrat lichtdurchlässig ist und daß die zum Teil lichtdurchlässige und zum Teil reflektierende Elektrode zwischen dem Substrat und den mehreren übereinanderliegenden Schichten die wenigstens ein n-i-p- oder p-i-n-Element definieren, angeordnet ist.

13. Zifferblatt nach einem der vorhergehenden Ansprüche, **dadurch gekennzeichnet, daß** das Zifferblatt ein Loch aufweist, das für den Durchgang einer Welle der Zeiger bestimmt ist.

14. Zifferblatt nach einem der vorhergehenden Ansprüche, **dadurch gekennzeichnet, daß** die Fläche des Substrats, die das n-i-p- oder p-i-n-Element trägt, strukturiert ist.
